# EUROPÄISCHE PATENTSCHRIFT

(11) **EP 2 540 583 B1**
(45) Veröffentlichungstag und Bekanntmachung des Hinweises auf die Patenterteilung: **27.02.2019**
(21) Anmeldenummer: 12168848.5
(22) Anmeldetag: 22.05.2012
(51) Int. Cl.: B60S 1/38

(54) **Wischblattvorrichtung**
Wiper blade device
Dispositif de raclette d'essuie-glace

(30) Priorität: 28.06.2011 DE 102011078168
(43) Veröffentlichungstag der Anmeldung: 02.01.2013
(73) Patentinhaber: ROBERT BOSCH GMBH, 70442 Stuttgart (DE)
(72) Erfinder: Depondt, Helmut, 3010 Kessel-Lo (BE); Bex, Koen, 3890 Jeuk/Limburg Belgien (BE); Herinckx, Dirk, 3350 Dries-Linter (BE)

(56) Entgegenhaltungen:
- FR-A1- 2 905 650
- FR-A1- 2 922 502

## Beschreibung

### Stand der Technik

Die Erfindung geht aus von einer Wischblattvorrichtung nach dem Oberbegriff des Patentanspruchs 1.

Es ist bereits eine Wischblattvorrichtung eines Wischblatts zur Verwendung an einem Kraftfahrzeug bekannt, welche eine Federleiste und zwei Endabschlusseinheiten umfasst. An zwei Enden der Federleiste sind die Endabschlusseinheiten angeordnet.

Eine Wischblattvorrichtung mit den Merkmalen des Oberbegriffs ist beispielsweise aus der FR 2905650 A1 und aus der FR 2922502 A1 bekannt.

### Offenbarung der Erfindung

Die Erfindung geht aus von einer Wischblattvorrichtung mit zumindest einer Federleiste und wenigstens einer Endabschlusseinheit.

Es wird vorgeschlagen, dass die Endabschlusseinheit zur Befestigung der Federleiste zumindest ein Rastelement umfasst, welches bei einer hergestellten Rastverbindung eine wesentliche Verformung im Vergleich zu wenigstens einem unmontierten Zustand aufweist. Unter einer "Federleiste" soll in diesem Zusammenhang insbesondere ein Bauelement verstanden werden, welches zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und welches insbesondere eine von einer Veränderung der Erstreckung abhängige Gegenkraft erzeugt, die der Veränderung entgegenwirkt. Unter einer "Erstreckung" eines Elements soll in diesem Zusammenhang insbesondere ein maximaler Abstand zweier Punkte einer senkrechten Projektion des Elements auf eine Ebene
verstanden werden. Bevorzugt ist die Federleiste einstückig ausgebildet. Unter "einstückig" soll insbesondere stoffschlüssig verbunden, wie beispielsweise durch einen Schweißprozess und/oder einen Klebeprozess usw., und besonders vorteilhaft angeformt verstanden werden, wie durch die Herstellung aus einem Guss und/oder durch die Herstellung in einem Ein- oder Mehrkomponentenspritzgussverfahren. Vorzugsweise ist die Federleiste länglich ausgebildet. Vorzugsweise besteht die Federleiste zumindest teilweise aus Federstahl. Vorzugsweise weist die Federleiste in einem unbelasteten Zustand im Wesentlichen eine Form eines gebogenen Stabs und besonders vorteilhaft eines abgeflachten gebogenen Stabs auf. Besonders vorteilhaft ist eine Krümmung der Federleiste entlang einer Längserstreckung in einem unbelasteten Zustand größer als eine Krümmung einer Fahrzeugoberfläche eines Kraftfahrzeugs, insbesondere einer Fahrzeugscheibe, über die die Federleiste in wenigstens einem Betriebszustand geführt wird. Vorzugsweise weist die Federleiste ein Rastelement, insbesondere eine Ausnehmung, auf, die mit zumindest einem der Rastelemente der Endabschlusseinheit in einem montierten Zustand in Wirkverbindung steht. Unter einer "Ausnehmung" soll hier und im Folgenden insbesondere eine Materialausnehmung in einem Bauteil verstanden werden, welche sich insbesondere von einer ersten Oberfläche des Bauteils zu einer gegenüberliegenden zweiten Oberfläche des Bauteils erstreckt.

Unter einer "Endabschlusseinheit" soll insbesondere eine Einheit verstanden werden, die dazu vorgesehen ist, an einem Ende der Federleiste befestigt zu werden. Die Endabschlusseinheit ist insbesondere dazu vorgesehen, in einem montierten Zustand einen Endabschluss eines die Wischblattvorrichtung umfassenden Wischblatts bereitzustellen. Vorzugsweise ist die Endabschlusseinheit zumindest teilweise aus einem Kunststoff gebildet. Vorzugsweise ist die Endabschlusseinheit als eine Endkappe ausgebildet, die insbesondere in wenigstens einem montierten Zustand einen Teil der Federleiste umgreift. Vorzugsweise umfasst die Wischblattvorrichtung genau zwei Endabschlusseinheiten, jeweils eine für jedes Ende der Federleiste. Unter "vorgesehen" soll insbesondere speziell ausgelegt und/oder ausgestattet verstanden werden. Unter einem "Rastelement" soll insbesondere ein Element verstanden werden, welches dazu vorgesehen ist, in einem Zusammenwirken mit einem weiteren Rastelement eine Rastverbindung herzustellen. Unter einer "wesentlichen Verformung" des Rastelements in einem ersten Zustand, insbesondere einem Zustand bei hergestellter Rastverbindung, soll in diesem Zusammenhang insbesondere zumindest eine Verdopplung, insbesondere wenigstens eine Verdreifachung, vorzugsweise mindestens eine Vervierfachung und besonders vorteilhaft zumindest eine Verfünffachung eines Volumens und/oder zumindest einer Oberfläche und/oder wenigstens einer Erstreckung in einer festen Richtung und/oder zumindest eines Winkels und/oder wenigstens einer Krümmung des Rastelements gegenüber einem zweiten Zustand, insbesondere einem unmontierten Zustand, verstanden werden. Vorzugsweise weist zumindest ein Teilbereich des Rastelements in einem montierten Zustand eine Änderung wenigstens einer Erstreckung um mindestens 0,5 cm, insbesondere um wenigstens 1 cm, vorzugsweise um zumindest 1,5 cm und besonders vorteilhaft um mindestens 2 cm gegenüber zumindest einem unmontierten Zustand auf.

Durch eine solche Ausgestaltung kann eine vorteilhaft komfortable und einfache Montage der Endabschlusseinheit an der Federleiste ermöglicht werden, da insbesondere eine einer Montage der Federleiste an der Endabschlusseinheit entgegenwirkende Kraft vorteilhaft gering gehalten werden kann. Dennoch kann in einem montierten Zustand der Endabschlusseinheit an der Federleiste eine hohe Haltekraft erreicht werden.

In einer vorteilhaften Ausgestaltung der Erfindung wird vorgeschlagen, dass bei der hergestellten Rastverbindung eine Erstreckung des Rastelements parallel zu einer Montagerichtung der Federleiste an der Endabschlusseinheit wesentlich größer ist als in zumindest einem unmontierten Zustand. Unter einer "Montagerichtung der Federleiste an der Endabschlusseinheit" soll insbesondere eine Richtung verstanden werden, in die die Federleiste bei einer Montage der Endabschlusseinheit relativ zu der Endabschlusseinheit effektiv bewegt wird. Vorzugsweise ist die Montagerichtung zumindest im Wesentlichen parallel zu einer Bogenlinie der Federleiste an einem derer Enden. Darunter, dass eine erste Erstreckung "wesentlich größer" als eine zweite Erstreckung ist, soll in diesem Zusammenhang insbesondere verstanden werden, dass die erste Erstreckung mindestens 2-mal, insbesondere wenigstens 3-mal, vorzugsweise zumindest 4-mal und besonders vorteilhaft mindestens 5-mal so groß ist wie die zweite Erstreckung. Hierdurch kann vorteilhaft einfach eine komfortable Montage bei gleichzeitig hoher Haltekraft ermöglicht werden.

Nach der Erfindung wird vorgeschlagen, dass in wenigstens einem unmontierten Zustand eine Erstreckung des Rastelements parallel zu einer ersten Richtung größer ist als eine Erstreckung parallel zu einer zu der ersten Richtung senkrechten zweiten Richtung und bei der hergestellten Rastverbindung eine Erstreckung des Rastelements parallel zu der ersten Richtung kleiner ist als eine Erstreckung parallel zu der zweiten Richtung. Hierdurch kann ein Rastelement bereitgestellt werden, welches bei einem Rastvorgang umgebogen wird und daher bei einer Montage eine relativ kleine Gegenkraft erzeugt und dennoch eine hohe Haltekraft in einem montierten Zustand aufweist. Vorzugsweise ist das Rastelement als Rasthaken und besonders vorteilhaft als laschenartiger Rasthaken ausgebildet. Unter einem "Rasthaken" soll insbesondere ein federelastisches Rastelement zur Herstellung einer Rastverbindung verstanden werden, das dazu vorgesehen ist, bei einer Montage elastisch ausgelenkt zu werden. Unter einem "laschenartigen Rasthaken" soll in diesem Zusammenhang insbesondere ein Rasthaken verstanden werden, dessen Erstreckung in wenigstens eine erste Richtung mindestens 2-mal, insbesondere wenigstens 4-mal, vorzugsweise zumindest 6-mal und besonders vorteilhaft mindestens 7-mal so groß ist wie eine Erstreckung in zumindest eine zu der ersten Richtung senkrechte zweite Richtung.

Vorteilhaft ragt das Rastelement in wenigstens einem unmontierten Zustand über zumindest eine Außenfläche der Endabschlusseinheit hinaus. Unter einer "Außenfläche der Endabschlusseinheit" soll insbesondere eine Oberfläche der Endabschlusseinheit verstanden werden, welche die Endabschlusseinheit bei der hergestellten Rastverbindung in wenigstens einer senkrechten Projektion auf eine Ebene gegenüber einer Umgebung begrenzt. Vorzugsweise handelt es sich bei der Außenfläche um eine Bodenfläche der Endabschlusseinheit, welche insbesondere bei der hergestellten Rastverbindung einer Wischleiste zugewandt ist. Unter einer "Wischleiste" soll insbesondere eine Einheit verstanden werden, welche eine Wischlippe und einen Haltebereich zur Halterung der Wischlippe an einem Wischleistenträger aufweist. Unter einer "Wischlippe" soll in diesem Zusammenhang ein Element der Wischblattvorrichtung verstanden werden, welches in einem Betrieb der Wischblattvorrichtung über die Fahrzeugoberfläche, insbesondere die Fahrzeugscheibe, bewegt wird, diese vorzugsweise während einer gesamten Bewegung berührt und besonders vorteilhaft möglichst gleichmäßig an die Fahrzeugoberfläche gepresst wird, insbesondere durch die Federleiste. Vorzugsweise ist die Wischlippe einstückig ausgestaltet und besteht vorzugsweise aus einem Naturkautschuk und besonders vorteilhaft aus einem synthetischen Kautschuk. Unter einem "Wischleistenträger" soll insbesondere eine Einheit verstanden werden, die dazu vorgesehen ist, die Wischleiste an der Federleiste zu befestigen. Darunter, dass "das Rastelement in wenigstens einem unmontierten Zustand über eine Außenfläche der Endabschlusseinheit hinausragt", soll in diesem Zusammenhang insbesondere verstanden werden, dass das Rastelement im unmontierten Zustand zumindest einen Teilbereich aufweist, der von einem Massenschwerpunkt der Endabschlusseinheit aus betrachtet jenseits der Außenfläche liegt. Hierdurch kann besonders vorteilhaft eine einfache und komfortable Montage erreicht werden, da durch eine große Längserstreckung des Rastelements ein vorteilhaft großes Drehmoment bei relativ geringem Kraftaufwand erzielt werden kann.

Wenn das Rastelement an der Endabschlusseinheit angeformt ist, kann eine Herstellung vorteilhaft vereinfacht werden. Vorzugsweise ist die Endabschlusseinheit zusammen mit dem Rastelement in einem Guss hergestellt.

Ferner wird vorgeschlagen, dass die Wischblattvorrichtung einen Wischleistenträger umfasst, welcher einen Aufnahmebereich für die Wischleiste aufweist. Vorzugsweise unterscheidet sich der Wischleistenträger von der Federleiste und ist als separates Bauteil ausgebildet. Vorzugsweise besteht der Wischleistenträger zumindest teilweise aus Gummi und/oder aus einem wenigstens teilelastischen Kunststoff. Vorzugsweise ist der Aufnahmebereich zu einer Aufnahme und Befestigung des Haltebereichs der Wischleiste vorgesehen. Hierdurch kann eine sichere Halterung der Wischleiste an der Federleiste bereitgestellt werden. Wenn der Wischleistenträger zusätzlich einen Aufnahmebereich zur Halterung einer Windleiteinheit aufweist, kann darüber hinaus auch eine sichere Halterung der Windleiteinheit an der Federleiste erreicht werden. Unter einer "Windleiteinheit" soll in diesem Zusammenhang insbesondere eine Einheit verstanden werden, welche dazu vorgesehen ist, einen auf die Wischblattvorrichtung wirkenden Fahrtwind abzuweisen und/oder für ein Anpressen der Wischlippe auf die Fahrzeugoberfläche zu nutzen. Vorzugsweise besteht die Windleiteinheit zumindest teilweise aus Gummi und/oder aus einem wenigstens teilelastischen Kunststoff.

In einer weiteren Ausgestaltung der Erfindung wird vorgeschlagen, dass die Endabschlusseinheit einen Aufnahmebereich für die Wischleiste aufweist, der den Aufnahmebereich des Wischleistenträgers bei der hergestellten Rastverbindung fortsetzt. Hierdurch kann insbesondere in einem Endbereich des Wischblatts vorteilhaft eine sichere Halterung der Wischleiste erreicht werden.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibungen und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt mit einer Wischblattvorrichtung in einer schematischen Darstellung,
- Fig. 2: die Wischblattvorrichtung aus Fig. 1 in einer Schnittdarstellung entlang einer Linie II-II in Fig. 1,
- Fig. 3: eine Endabschlusseinheit der Wischblattvorrichtung aus Fig. 1 in einer Schnittdarstellung,
- Fig. 4: die Endabschlusseinheit und eine Federleiste der Wischblattvorrichtung aus Fig. 1 in einer isometrischen Schnittdarstellung,
- Fig. 5: die Federleiste aus Fig. 4 in einer Draufsicht,
- Fig. 6: die Endabschlusseinheit, die Federleiste und einen Wischleistenträger der Wischblattvorrichtung aus Fig. 1 in einer isometrischen Schnittdarstellung,
- Fig. 7: die Wischblattvorrichtung aus Fig. 1 in einer Schnittdarstellung entlang einer Linie VII-VII in Fig. 2,
- Fig. 8: eine weitere Wischblattvorrichtung in einer Schnittdarstellung,
- Fig. 9: eine Endabschlusseinheit und eine Federleiste der Wischblattvorrichtung aus Fig. 8 in einer Schnittdarstellung und
- Fig. 10: die Endabschlusseinheit und die Federleiste der Wischblattvorrichtung aus Fig. 8 in einer isometrischen Schnittdarstellung.

### Beschreibung der Ausführungsbeispiele

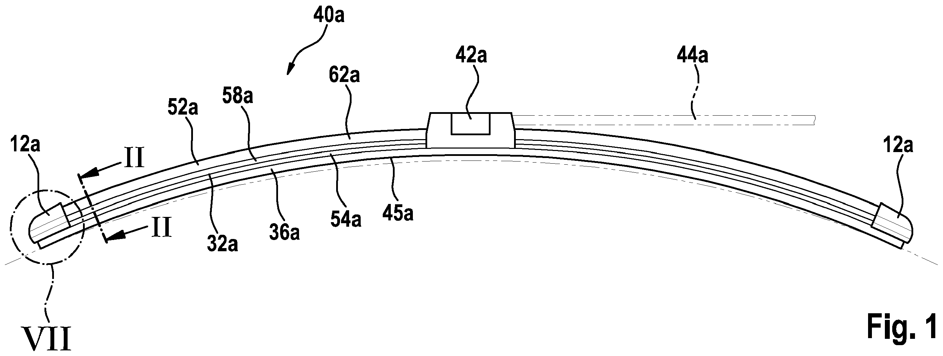

Figur 1 zeigt schematisch ein Wischblatt 40a mit einer erfindungsgemäßen Wischblattvorrichtung. Das Wischblatt 40a weist einen Adapter 42a auf, der zur Montage des Wischblatts 40a an einem gestrichelt eingezeichneten Wischarm 44a einer Scheibenwischeranlage eines Kraftfahrzeugs vorgesehen ist.

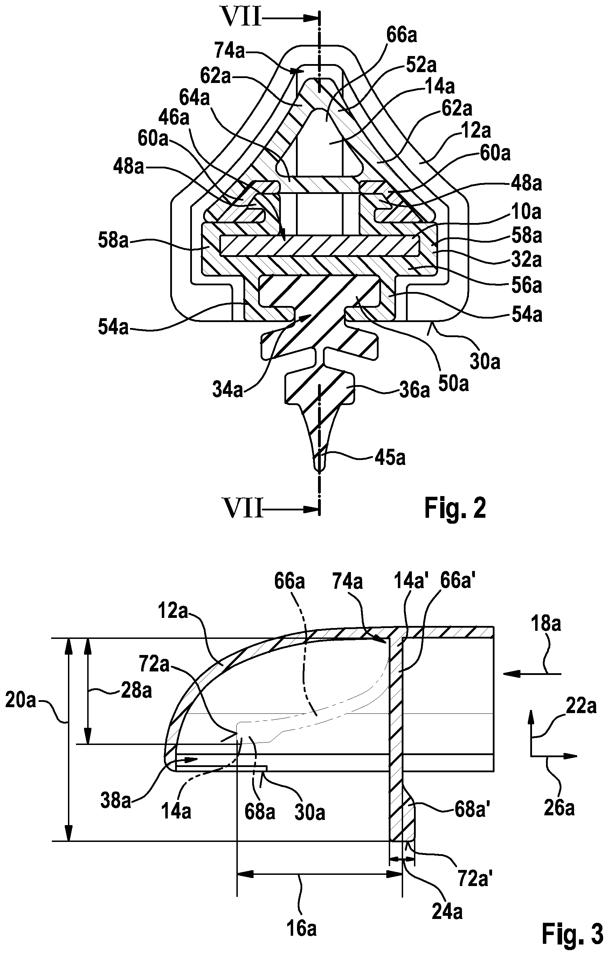

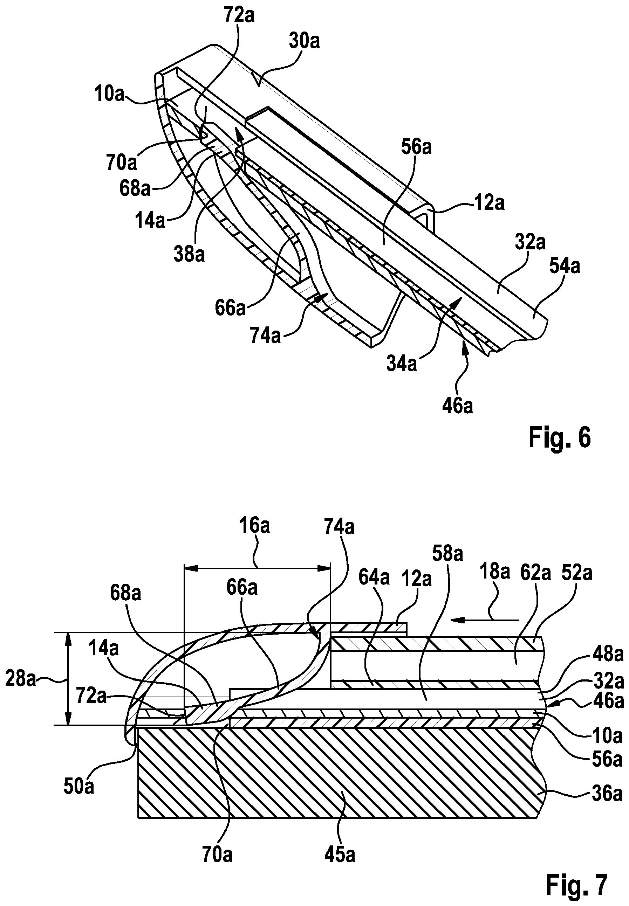

Figur 2 zeigt die Wischblattvorrichtung in einer Schnittdarstellung entlang einer Linie II-II in Fig. 1. Die Wischblattvorrichtung umfasst eine bandartig lang gestreckte und gekrümmte Federleiste 10a aus Federstahl. Ferner weist die Wischblattvorrichtung einen Wischleistenträger 32a aus einem elastischen Kunststoff, eine Wischleiste 36a aus einem synthetischen Kautschuk und eine Windleiteinheit 52a aus einem teilelastischen Kunststoff auf. Wie anhand von Fig. 1 erkennbar, sind der Wischleistenträger 32a, die Wischleiste 36a und die Windleiteinheit 52a länglich ausgeführt und sind in einem montierten Zustand parallel zur Federleiste 10a angeordnet. Die Federleiste 10a ist dazu vorgesehen, in einem Betrieb der Scheibenwischeranlage eine Wischlippe 45a der Wischleiste 36a weitgehend gleichmäßig gegen eine zu wischende Oberfläche zu drücken. Hierzu ist eine Krümmung der Federleiste 10a derart ausgebildet, dass sie in einem unbelasteten Zustand größer ist als eine größte, an der zu wischenden Oberfläche auftretende Krümmung. Der Wischleistenträger 32a ist dazu vorgesehen, die Wischleiste 36a fest mit der Federleiste 10a zu verbinden und beim Wischen auftretende Seitenkräfte von der Wischleiste 36a auf die Federleiste 10a zu übertragen. Die Windleiteinheit 52a sorgt für einen erhöhten Anpressdruck des Wischblatts 40a auf die Oberfläche und verhindert ein Abheben des Wischblatts 40a von der Oberfläche aufgrund eines Fahrtwinds bei schneller Fahrt des Kraftfahrzeugs. Das Wischblatt 40a wird an beiden Enden jeweils durch eine Endabschlusseinheit 12a der Wischblattvorrichtung abgeschlossen. Die als Endkappe ausgebildete Endabschlusseinheit 12a nimmt hierbei jeweils Endbereiche der Federleiste 10a, des Wischleistenträgers 32a und der Windleiteinheit 52a auf (vgl. Fig. 7).

Gemäß Fig. 2 weist der Wischleistenträger 32a im Querschnitt betrachtet zumindest im Wesentlichen eine H-förmige Gestalt auf. Enden des Wischleistenträgers 32a sind im Querschnitt betrachtet zur Bildung von Aufnahmebereichen 34a, 46a und Halteleisten 48a umgelenkt. Der Aufnahmebereich 34a ist zur Aufnahme eines Halteelements 50a der Wischleiste 36a vorgesehen. Der Aufnahmebereich 46a ist zur Aufnahme der Federleiste 10a vorgesehen. Die Halteleisten 48a sind zur Halterung der Windleiteinheit 52a vorgesehen. An einem der Wischleiste 36a zugewandten Teil des H-förmigen Querschnitts des Wischleistenträgers 32a ist der Aufnahmebereich 34a ausgebildet. Der Wischleiste 36a zugewandte untere H-Schenkel 54a des Wischleistenträgers 32a sind im Querschnitt betrachtet zueinander hin umgebogen. In einem Endbereich sind die unteren H-Schenkel 54a des Wischleistenträgers 32a parallel zueinander und parallel zu einem H-Balken 56a ausgerichtet. Hierdurch ist ein in Richtung der Wischleiste 36a offener Hohlraum gebildet, in den das Halteelement 50a der Wischleiste 36a formschlüssig passt. An einem der Windleiteinheit 52a zugewandten Teil des H-förmigen Querschnitts des Wischleistenträgers 32a sind der Aufnahmebereich 46a sowie die Halteleisten 48a ausgebildet. Der Windleiteinheit 52a zugewandte obere H-Schenkel 58a erstrecken sich vom H-Balken 56a aus zunächst beidseitig parallel zum H-Balken 56a nach außen und sind dann rechtwinklig in eine der Windleiteinheit 52a zugewandte Richtung umgebogen. Nach Überbrückung einer Distanz, welche der Dicke der Federleiste 10a entspricht, sind die oberen H-Schenkel 58a erneut rechtwinklig umgebogen und zwar zueinander hin. Nach Überbrückung einer weiteren Distanz sind die oberen H-Schenkel 58a erneut um 90° in einer von dem H-Balken 56a abgewandten Richtung umgelenkt. Nach erneuter Überwindung einer Distanz sind die oberen H-Schenkel 58a nach außen in eine von einem Flächenschwerpunkt des Querschnitts des Wischleistenträgers 32a wegweisende Richtung rechtwinklig umgebogen. Unmittelbar oberhalb des H-Balkens 56a ist ein in Richtung der Windleiteinheit 52a offener Hohlraum gebildet, in den die Federleiste 10a formschlüssig passt. Die umgelegten Enden der oberen H-Schenkel 58a bilden die Halteleisten 48a, die in korrespondierende Haltenuten 60a der Windleiteinheit 52a eingreifen.

Die Windleiteinheit 52a hat im Querschnitt betrachtet zumindest im Wesentlichen eine Form eines gleichschenkligen Dreiecks (vgl. Fig. 2). Dreieckschenkel 62a des Dreiecks sind über eine Basisseite 64a des Dreiecks verlängert und weisen dort die Haltenuten 60a auf. Die Windleiteinheit 52a besteht in einem Bereich der Haltenuten 60a aus einem härteren Kunststoff verglichen mit den übrigen Bereichen der Windleiteinheit 52a. Hierdurch kann ein sicherer Halt der Haltenuten 60a an den Halteleisten 48a des Wischleistenträgers 32a sichergestellt werden. Ferner kann ein Aufschieben der Windleiteinheit 52a auf den Wischleistenträger 32a bei einer Montage des Wischblatts 40a vereinfacht werden. Die Dreieckschenkel 62a weisen zur Verbesserung ihrer Windleiteigenschaften eine von außen betrachtet leicht konkave Krümmung auf.

Figur 3 zeigt die Endabschlusseinheit 12a in einem unmontierten Zustand in einer seitlichen Schnittdarstellung. Die Endabschlusseinheit 12a besteht aus einem zumindest teilelastischen Kunststoff. Die Endabschlusseinheit 12a umfasst zur Befestigung der Federleiste 10a ein Rastelement 14a', welches bei einer hergestellten Rastverbindung eine wesentliche Verformung im Vergleich zum unmontierten Zustand aufweist. In der Fig. 3 ist das Rastelement 14a' sowohl im unmontierten Zustand sowie gestrichelt im montierten Zustand gezeichnet, wobei das Rastelement 14a und dessen Komponenten im unmontierten Zustand mit gestrichenen und im montierten Zustand mit ungestrichenen Bezugszeichen bezeichnet sind. Bei der hergestellten Rastverbindung ist eine Erstreckung 16a des Rastelements 14a parallel zu einer Montagerichtung 18a der Federleiste 10a an der Endabschlusseinheit 12a wesentlich größer als im unmontierten Zustand. Ferner ist im unmontierten Zustand eine Erstreckung 20a des Rastelements 14a parallel zu einer ersten Richtung 22a größer als eine Erstreckung 24a parallel zu einer zu der ersten Richtung 22a senkrechten zweiten Richtung 26a und bei der hergestellten Rastverbindung ist eine Erstreckung 28a des Rastelements 14a parallel zu der ersten Richtung 22a kleiner als eine Erstreckung 16a parallel zu der zweiten Richtung 26a. Das Rastelement 14a' ist laschenartig ausgebildet und wird bei einer Montage der Federleiste 10a umgebogen. Im unmontierten Zustand ragt das Rastelement 14a' über zumindest eine Außenfläche 30a der Endabschlusseinheit 12a hinaus. Das Rastelement 14a' ist an der Endabschlusseinheit 12a einstückig angeformt. Das Rastelement 14a' weist einen Hals 66a' und daran angeformt einen verdickten Kopf 68a' auf.

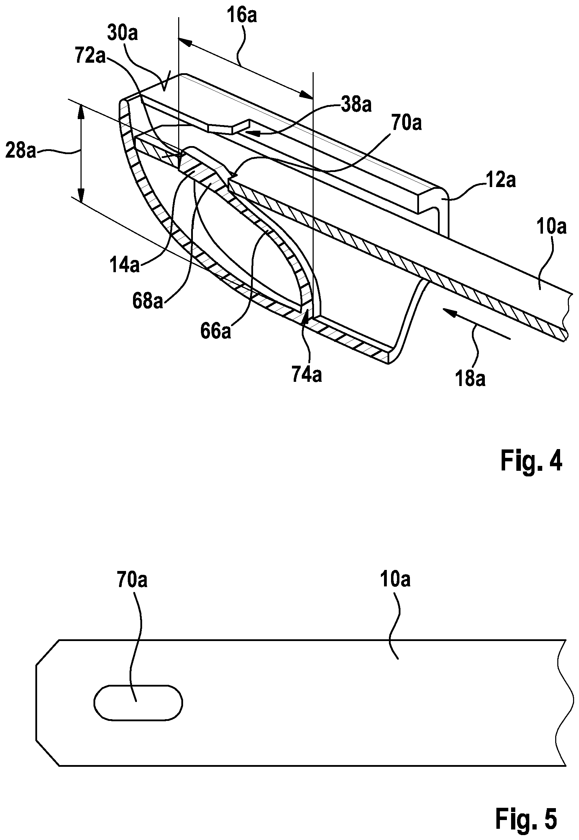

Figur 4 zeigt die Endabschlusseinheit 12a mit montierter Federleiste 10a in einer isometrischen Schnittdarstellung von schräg unten, wobei in Fig. 4 der besseren Übersichtlichkeit halber auf eine Darstellung des Wischleistenträgers 32a, der Wischleiste 36a und der Windleiteinheit 52a verzichtet wurde. Der Kopf 68a des Rastelements 14a greift bei hergestellter Rastverbindung in eine Rastausnehmung 70a der Federleiste 10a (vgl. Fig. 5). Beim Einführen der Federleiste 10a in die Endabschlusseinheit 12a in eine Montagerichtung 18a wird der Hals 66a' des Rastelements 14a' gemäß Fig. 3 verbogen. Wenn die Federleiste 10a genügend tief eingeschoben ist, rastet der Kopf 68a des Rastelements 14a in die Ausnehmung 70a ein. Ein Herausziehen der Federleiste 10a entgegen der Montagerichtung 18a ist verhindert, da eine im unmontierten Zustand von einem Masseschwerpunkt der Endabschlusseinheit 12a weg weisende Rastfläche 72a mit einer korrespondierenden, die Rastausnehmung 70a begrenzenden Fläche zusammenwirkt. Somit kann eine einfache Einführbarkeit bei gleichzeitig vorteilhaft hoher Haltekraft erreicht werden.

Figur 6 zeigt die Endabschlusseinheit 12a mit montierter Federleiste 10a und montiertem Wischleistenträger 32a in einer isometrischen Schnittdarstellung von schräg unten, wobei in Fig. 6 der besseren Übersichtlichkeit halber auf eine Darstellung der Wischleiste 36a und des Windleiteinheit 52a verzichtet wurde. Die Endabschlusseinheit 12a weist einen Aufnahmebereich 38a für die Wischleiste 36a auf, welcher den Aufnahmebereich 34a des Wischleistenträgers 32a bei der hergestellten Rastverbindung fortsetzt. Hierdurch kann eine sichere Halterung der Wischleiste 36a auch in einem Endbereich des Wischblatts 40a sichergestellt werden.

Figur 7 zeigt die Wischblattvorrichtung in einer Schnittdarstellung entlang einer Linie VII-VII in Fig. 2. Eine Position der Windleiteinheit 52a parallel zur Federleiste 10a ist durch einen Anschlag der Windleiteinheit 52a gegen den Hals 66a des Rastelements 14a in dessen Anformungsbereich 74a definiert. Eine Position der Federleiste 10a innerhalb der Endabschlusseinheit 12a senkrecht zur Federleiste 10a ist durch von dem Wischleistenträger 32a und der Windleiteinheit 52a gebildeten Anschläge begrenzt. Die Endabschlusseinheit 12a ist in einem Innenbereich derart geformt, dass der Wischleistenträger 32a mit aufgesetzter Windleiteinheit 52a formschlüssig in die Endabschlusseinheit 12a passt (vgl. Fig. 2). Hierbei können insbesondere zusätzliche Abstandsstege zum Einsatz kommen, wie dies insbesondere in Fig. 2 und 7 durch eingezeichnete Abstände zwischen der Endabschlusseinheit 12a und dem Wischleistenträger 32a sowie zwischen der Endabschlusseinheit 12a und der Windleiteinheit 52a angedeutet ist. Die Abstandsstege können insbesondere dazu vorgesehen sein, Fertigungs- und/oder Montagetoleranzen auszugleichen.

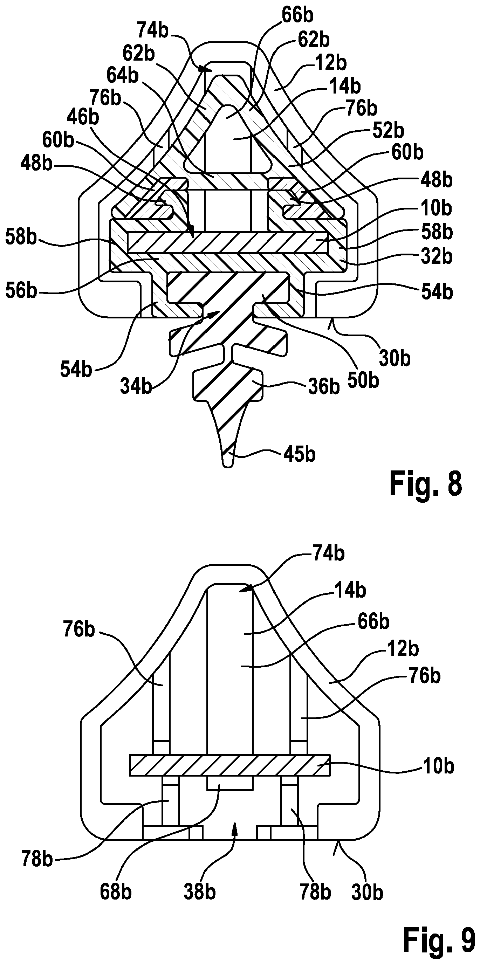

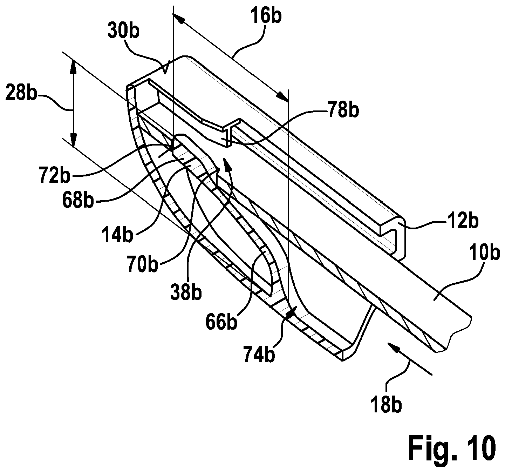

In Fig. 8 bis 10 ist ein weiteres Ausführungsbeispiel der Erfindung gezeigt. Die nachfolgende Beschreibung beschränkt sich im Wesentlichen auf die Unterschiede zwischen den Ausführungsbeispielen, wobei bezüglich gleichbleibender Bauteile, Merkmale und Funktionen auf die Beschreibung des anderen Ausführungsbeispiels, insbesondere Fig. 1 bis 7, verwiesen werden kann. Zur Unterscheidung der Ausführungsbeispiele ist der Buchstabe a in den Bezugszeichen des Ausführungsbeispiels in Fig. 1 bis 7 durch den Buchstaben b in den Bezugszeichen des Ausführungsbeispiels Fig. 8 bis 10 ersetzt. Bezüglich gleich bezeichneter Bauteile, insbesondere in Bezug auf Bauteile mit gleichen Bezugszeichen, kann grundsätzlich auch auf die Figuren und/oder die Beschreibung des anderen Ausführungsbeispiels, insbesondere Fig. 1 bis 7, verwiesen werden.

Die Wischblattvorrichtung gemäß Fig. 8 bis 10 unterscheidet sich von der Wischblattvorrichtung aus dem vorhergehenden Ausführungsbeispiel lediglich in der Ausgestaltung einer Endabschlusseinheit 12b. Die Endabschlusseinheit 12b weist gemäß Fig. 8 bis 10 zusätzlich vier Haltestege 76b, 78b auf, die einen Anschlag in eine zu einer Federleiste 10b senkrechte Richtung definieren. Somit ist die Federleiste 10b an sich schon in der Endabschlusseinheit 12b bei hergestellter Rastverbindung vollständig fixiert, wodurch eine stabilere Bauweise erreicht werden kann. Die Haltestege 76b, 78b sind einseitig leicht abgeflacht, um ein vorteilhaft einfaches, selbstzentrierendes Einführen der Federleiste 10b in die Endabschlusseinheit 12b zu ermöglichen.

## Patentansprüche

1. Wischblattvorrichtung mit zumindest einer Federleiste (10a; 10b) und wenigstens einer Endabschlusseinheit (12a; 12b), wobei die Endabschlusseinheit (12a; 12b) zur Befestigung der Federleiste (10a; 10b) zumindest ein Rastelement (14a; 14b) umfasst, welches bei einer hergestellten Rastverbindung eine wesentliche Verformung im Vergleich zu wenigstens einem unmontierten Zustand aufweist, **dadurch gekennzeichnet, dass** in zumindest einem unmontierten Zustand eine Erstreckung (20a; 20b) des Rastelements (14a; 14b) parallel zu einer ersten Richtung (22a; 22b) größer ist als eine Erstreckung (24a; 24b) parallel zu einer zu der ersten Richtung (22a; 22b) senkrechten zweiten Richtung (26a; 26b) und bei der hergestellten Rastverbindung eine Erstreckung (28a; 28b) des Rastelements (14a; 14b) parallel zu der ersten Richtung (22a; 22b) kleiner ist als eine Erstreckung (16a; 16b) parallel zu der zweiten Richtung (26a; 26b).

2. Wischblattvorrichtung nach Anspruch 1, **dadurch gekennzeichnet, dass** bei der hergestellten Rastverbindung eine Erstreckung (16a; 16b) des Rastelements (14a; 14b) parallel zu einer Montagerichtung (18a; 18b) der Federleiste (10a; 10b) an der Endabschlusseinheit (12a; 12b) wesentlich größer ist als in zumindest einem unmontierten Zustand.

3. Wischblattvorrichtung nach einem der vorhergehenden Ansprüche, **dadurch gekennzeichnet, dass** das Rastelement (14a; 14b) in wenigstens einem unmontierten Zustand über zumindest eine Außenfläche (30a; 30b) der Endabschlusseinheit (12a; 12b) hinausragt.

4. Wischblattvorrichtung nach einem der vorhergehenden Ansprüche, **dadurch gekennzeichnet, dass** das Rastelement (14a; 14b) an der Endabschlusseinheit (12a; 12b) angeformt ist.

5. Wischblattvorrichtung nach einem der vorhergehenden Ansprüche, **gekennzeichnet durch** einen Wischleistenträger (32a; 32b), welcher einen Aufnahmebereich (34; 34b) für eine Wischleiste (36a; 36b) aufweist.

6. Wischblattvorrichtung zumindest nach Anspruch 5, **dadurch gekennzeichnet, dass** die Endabschlusseinheit (12a; 12b) einen Aufnahmebereich (38a; 38b) für die Wischleiste (36a; 36b) aufweist, der den Aufnahmebereich (34a; 34b) des Wischleistenträgers (32a; 32b) bei der hergestellten Rastverbindung fortsetzt.

7. Wischblatt (40a; 40b) mit einer Wischblattvorrichtung nach einem der vorhergehenden Ansprüche.

## Claims

1. Wiper blade device having at least one spring strip (10a; 10b) and at least one end termination unit (12a; 12b), wherein, in order to fasten the spring strip (10a; 10b), the end termination unit (12a; 12b) comprises at least one latching element (14a; 14b) which, when a latching connection is produced, has a substantial deformation in comparison to at least one unmounted state, **characterized in that**, in at least one unmounted state, an extent (20a; 20b) of the latching element (14a; 14b) parallel to a first direction (22a; 22b) is greater than an extent (24a; 24b) parallel to a second direction (26a; 26b) perpendicular to the first direction (22a; 22b), and, when the latching connection is produced, an extent (28a; 28b) of the latching element (14a; 14b) parallel to the first direction (22a; 22b) is smaller than an extent (16a; 16b) parallel to the second direction (26a; 26b).

2. Wiper blade device according to Claim 1, **characterized in that**, when the latching connection is produced, an extent (16a; 16b) of the latching element (14a; 14b) parallel to an installation direction (18a; 18b) of the spring strip (10a; 10b) on the end termination unit (12a; 12b) is substantially greater than in at least one unmounted state.

3. Wiper blade device according to either of the preceding claims, **characterized in that**, in at least one unmounted state, the latching element (14a; 14b) projects beyond at least one outer surface (30a; 30b) of the end termination unit (12a; 12b).

4. Wiper blade device according to one of the preceding claims, **characterized in that** the latching element (14a; 14b) is formed integrally on the end termination unit (12a; 12b).

5. Wiper blade device according to one of the preceding claims, **characterized by** a wiper strip support (32a; 32b), which has a receiving region (34; 34b) for a wiper strip (36a; 36b).

6. Wiper blade device at least according to Claim 5, **characterized in that** the end termination unit (12a; 12b) has a receiving region (38a; 38b) for the wiper strip (36a; 36b), said receiving region continuing the receiving region (34a; 34b) of the wiper strip support (32a; 32b) when the latching connection is produced.

7. Wiper blade (40a; 40b) with a wiper blade device according to one of the preceding claims.

## Revendications

1. Dispositif de balai d'essuie-glace comprenant au moins une raclette élastique (10a ; 10b) et au moins une unité de terminaison (12a ; 12b), l'unité de terminaison (12a ; 12b) comprenant au moins un élément d'encliquetage (14a ; 14b) pour la fixation de la raclette élastique (10a ; 10b), lequel présente, lorsqu'une connexion par encliquetage est établie, une déformation considérable par comparaison avec au moins un état non monté, **caractérisé en ce que** dans au moins un état non monté, une étendue (20a ; 20b) de l'élément d'encliquetage (14a ; 14b) parallèlement à une première direction (22a ; 22b) est supérieure à une étendue (24a ; 24b) parallèlement à une deuxième direction (26a ; 26b) perpendiculaire à la première direction (22a ; 22b), et lorsque la connexion par encliquetage est établie, une étendue (28a ; 28b) de l'élément d'encliquetage (14a ; 14b) parallèlement à la première direction (22a ; 22b) est inférieure à une étendue (16a ; 16b) parallèlement à la deuxième direction (26a ; 26b).

2. Dispositif de balai d'essuie-glace selon la revendication 1, **caractérisé en ce que** lorsque la connexion par encliquetage est établie, une étendue (16a ; 16b) de l'élément d'encliquetage (14a ; 14b) parallèlement à une direction de montage (18a ; 18b) de la raclette élastique (10a ; 10b) sur l'unité de terminaison (12a ; 12b) est considérablement plus grande que dans au moins un état non monté.

3. Dispositif de balai d'essuie-glace selon l'une quelconque des revendications précédentes, **caractérisé en ce que** l'élément d'encliquetage (14a ; 14b) dans au moins un état non monté fait saillie au-delà d'au moins une surface extérieure (30a ; 30b) de l'unité de terminaison (12a ; 12b).

4. Dispositif de balai d'essuie-glace selon l'une quelconque des revendications précédentes, **caractérisé en ce que** l'élément d'encliquetage (14a ; 14b) est façonné sur l'unité de terminaison (12a ; 12b).

5. Dispositif de balai d'essuie-glace selon l'une quelconque des revendications précédentes, **caractérisé par** un support de raclette de balai d'essuie-glace (32a ; 32b), qui présente une région de réception (34 ; 34b) pour une raclette de balai d'essuie-glace (36a ; 36b).

6. Dispositif de balai d'essuie-glace selon au moins la revendication 5, **caractérisé en ce que** l'unité de terminaison (12a ; 12b) présente une région de réception (38a ; 38b) pour la raclette de balai d'essuie-glace (36a ; 36b) qui prolonge la région de réception (34a ; 34b) du support de raclette de balai d'essuie-glace (32a ; 32b) lorsque la connexion par encliquetage est établie.

7. Balai d'essuie-glace (40a ; 40b) comprenant un dispositif de balai d'essuie-glace selon l'une quelconque des revendications précédentes.
